# EUROPEAN PATENT SPECIFICATION

(11) **EP 2 518 538 B1**
(45) Date of publication and mention of the grant of the patent: **25.02.2015**
(21) Application number: 10839386.9
(22) Date of filing: 21.12.2010
(51) Int. Cl.: G02B 5/08, B32B 7/02, B32B 15/08, F24J 2/10

(54) **FILM MIRROR, METHOD FOR PRODUCING SAME, AND REFLECTING DEVICE FOR SOLAR THERMAL POWER GENERATOR USING SAID FILM MIRROR**
FILMSPIEGEL, VERFAHREN ZU SEINER HERSTELLUNG SOWIE REFLEXIONSVORRICHTUNG FÜR EINEN SONNENENERGIEGENERATOR MIT DIESEM FILMSPIEGEL
FILM MIROIR, SON PROCEDE DE PRODUCTION, ET DISPOSITIF DE REFLEXION POUR GENERATEUR D'ENERGIE THERMIQUE SOLAIRE UTILISANT CE FILM MIROIR

(30) Priority: 21.12.2009 JP 2009288777
(43) Date of publication of application: 31.10.2012
(73) Proprietor: Konica Minolta Advanced Layers, Inc., Hachioji-shi, Tokyo (JP)
(72) Inventor: KOJIMA Takeshi, Hachioji-shi Tokyo 192-8505 (JP)
(74) Representative: Henkel, Breuer & Partner
(86) International application number: PCT/JP2010/072979
(87) International publication number: WO 2011/078156

(56) References cited:
- EP-A- 0 187 491
- JP-A- 61 154 942
- JP-A- 2002 122 717
- JP-A- 2006 326 971

## Description

### FIELD OF THE INVENTION

The present invention relates to a film mirror which has excellent light resistance and weather resistance and has good normal reflectance to sunlight, a method for producing the same and a reflecting device for a solar thermal power generation using the same.

### TECHNICAL BACKGROUND

In recent years, natural energy such as coal energy, biomass energy, nuclear energy, wind power energy, and solar energy, is investigated as alternative energy replaced with fossil fuel energy such as petroleum and natural gas. Among them, the natural energy which is most stable and with much quantity as alternative energy replaced with fossil fuel energy is thought to be a solar energy.

However, even though solar energy is considered as a possible alternative energy, in view of utilizing it, it has problems such that (1) energy density of solar energy is low and (2) storage and transfer of solar energy are difficult.

In order to resolve the problem that the energy density of solar energy is low, proposed is a huge reflective device which can collect solar energy.

Since reflective device is exposed to ultraviolet radiation or heat by sunlight, a rainstorm, and a sandstorm, etc., glass mirrors have been used conventionally. While a glass mirror has high durability over environment, glass mirror had the problem that the construction costs of a plant increases, because damage occurs during the transportation or the suitable strength to hold a heavy mirror is required to the stand..

In order to solve the above-mentioned problem, investigated was to replace a glass mirror to a reflective sheet made of resin (for example, refer to Patent Document 1). Since the resin is weak to outside environment and a problem by corrosion of silver occurs when metal such as silver is used for a reflecting layer, due to penetrating oxygen, a steam, or hydrogen sulfide, etc. through the resin layer, it was difficult to apply the mirror made of resin.

In the purpose of condensing sunlight, from a viewpoint of obtaining a high reflectance, it is desirable to constitute a metal layer with silver which has a high reflectance of a visible light range as indicated by Patent Documents 2. However, silver is inferior to weather resistance and there is a problem of being easy to deteriorate with oxygen, steam, sulfur, etc.

In Patent Documents 2, it is thought that the plastic substrate fimctions as a protective layer of a silver film layer. However, since plastic tends to penetrate steam or oxygen in the air, silver deteriorates by oxidation, resulting in causing the problem of decreasing the reflectance of a mirror.

Further, when using a mirmr for reflecting sunlight, a mirror is used outdoors in many cases. In using it outdoors, a mirror will be exposed to a rainstorm. Under such severe environment, oxidation deterioration of silver is accelerated and causes more remarkable problem of decreasing the reflectance of a mirror.

About a technology for prevention of silver corrosion, known is a method of coating a corrosion prevention layer such as a resin layer as adjacent layers to the light incidence side of a silver layer (for example, refer to Patent Documents 3). However, when a silver layer is used in a reflection layer as a mirror for sunlight reflection, it is difficult to intercept completely the component which functions as factor of corrosion of silver, such as oxygen, steam, and sulfur from the outside. Further, since the corrosion of silver layer was promoted by the radical component generated by a resin layer excited by strong ultraviolet radiation, decrease of the reflectance by deterioration of silver layer was not fully able to be canceled.

Moreover, in Patent Documents 4, investigated was a method of reducing deterioration by an ultraviolet radiation of a resin base material by comprising an ultraviolet absorber, i.e., by preparing an ultraviolet absorption layer in a layer outside of a resin base material. Since most ultraviolet radiation can be absorbed by this method, it is possible to control deterioration of a resin base material to some extent However, even if using such a method, the decrease in the reflectance by deterioration of silver layer was not enough improved, and further improvement was still required.

### PRIOR TECHNICAL DOCUMENT

### PATENT DOCUMENT

Patent Document 1: Unexamined Japanese Patent Application Publication (hereinafter referred to as JP-A) No. 2005-59382
Patent Document 2: JP-A No. 6-38860
Patent Document 3: JP-A No. 2002-122717
Patent Document 4: USP 7,507,776

### SUMMARY

### PROBLEMS TO BE SOLVED BY THE PRESENT INVENTION

In view of the above-mentioned problem and a situation, the inventors of the present invention conducted diligent investigations. As a result, with technology described in Patent Documents 4, it was found that no all ultraviolet radiation could be absorbed by the ultraviolet absorption layer, but a part of the light of ultraviolet regions is penetrated. Therefore, when this technology was applied to a silver mirror, it was found that a resin base material layer is excited by the ultraviolet radiation which was not able to be absorbed in an ultraviolet absorption layer. As a result, the decrease in the reflectance by promoting the corrosion of silver layer adjacent to this resin base material layer could not fully be inhibited. Moreover, it was also found that in the case where an adhesive layer exists between a resin base material layer and silver layer, the ultraviolet radiation which penetrated the ultraviolet absorption layer excited the adhesive layer and the corrosion of adjacent silver layer is promoted similarly. Moreover, although addition of a large quantity of an ultraviolet absorber was expected to enhance an absorption efficiency of ultraviolet radiation and inhibits such deterioration, the addition of a large quantity of an ultraviolet absorber leads also to raising the rate of ultraviolet absorption by an ultraviolet absorber, resulting in promoting deterioration by the ultraviolet radiation of the ultraviolet absorber itself. When exposed to strong ultraviolet radiation, an ultraviolet absorber will deteriorate, and an above-mentioned problem will actualize gradually because the absorption of ultraviolet radiation becomes weaker with progress of time.

Therefore, an object of the present invention is to provide a film mirror, a method for producing the same and a reflecting device for solar thermal power generation using the same which exhibits light weight and flexible and makes it possible to make a large size mirror and to be mass-produced with a low production cost, which exhibits excellent light resistance and weather resistance and has good normal reflectance to sunlight, as well as preventing decrease in the normal reflectance due to deterioration of silver layer in a reflecting layer.

### MEANS TO SOLVE THE PROBLEMS

The above object has been attained by the following constitutions:
1. A film mirror comprising constituent layers comprising an ultraviolet absorption layer, a resin base material layer, a silver reflective layer, and a lower adjacent layer provided adjacently to each other in this order from a light incident side, or a film minor comprising constituent layers comprising an ultraviolet absorption layer, a resin base material layers, an adhesive layer, a silver reflective layer, and a lower adjacent layer provided adjacently to each other in this order from a light incident side, wherein either the resin base material layer or the adhesive layer contains a stabilizer.
2. The film mirror of item 1, wherein the ultraviolet absorber the ultraviolet absorption layer is a benzotriazol based ultraviolet absorber.
3. The film mirror of item 1 or 2, wherein the stabilizer comprises at least one of a phenol based antioxidant, a phosphite based antioxidant, a thiol based antioxidant, and a hindered amine based light stabilizer.
4. The film mirror of any one of items 1 to 3, wherein the lower adjacent layers is a resin layer containing a corrosion inhibitor.
5. The film mirror of any one of items 1 to 4 comprising a gas barrier layer at outside the resin base material layer.
6. The film mirror of any one of items 1 to 5 comprising a blemish prevention layer as an outermost layer.
7. The film mirror of any one of items 1 to 6, wherein a thickness of the whole layer including the resin base material layer is in the range of 75 to 250 µm.
8. A method for producing the film mirror of any one of items 1 to 7 comprising a step of forming the silver reflecting layer by a silver vacuum evaporation.
9. A reflecting device for a solar thermal power generation comprising the film mirror of any one of items 1 to 7.

### EFFECTS OF THE INVENTION

According to the present invention, it has become possible to provide a film mirror, a method for producing the same and a reflecting device for solar thermal power generation using the same which exhibits light weight and flexible and makes it possible to make a large size mirror and to be mass-produced with a low production cost, which exhibits excellent light-resistance and weather resistance and has good normal reflectance to sunlight, as well as preventing decrease in the normal reflectance due to deterioration of silver layer in a reflecting layer.

### PREFFERED EMBODIMENT OF THE INVENTION

The film mirror of the present invention is characterized by comprising constituent layers comprising an ultraviolet absorption layer, a resin base material layer, a silver reflective layer, and a lower adjacent layer provided adjacently to each other in this order from a light incident side, or a film mirror comprising constituent layers comprising an ultraviolet absorption layer, a resin base material layers, an adhesive layer, a silver reflective layer, and a lower adjacent layer provided adjacently to each other in this order from a light incident side, wherein either the resin base material layer or the adhesive layer contains a stabilizer. These characteristics are technical characteristics common through claims 1 through 9.

According to the embodiment of the present invention, a resin base material which acts as a support of a silver reflecting layer is provided on upper side of the silver layer, namely, on the light incident side whereby it enhances barrier effect to the constituents which become factors for corrosion of a silver reflecting layer, and further deterioration of the resin base material is prevented by providing an ultraviolet absorption layer on upper part of resin base material layer. Further, stabilizer included in the resin base material layer inhibits excitation of the resin base material layer by the ultraviolet radiation which penetrates through the ultraviolet absorption layer, resulting in preventing a corrosion deterioration of the silver layer adjacent thereto. Moreover, when an adhesive exists between the resin base material layer and the silver layer, stabilizer at least included in any one of the resin base material layer and the silver layer prevents excitation of the resin base material layer and/or the adhesive layer, resulting in inhibiting a corrosion deterioration of silver layer. Even in a case where it is used under severe environment, above mentioned constitution can provide a film mirror which fully controls a decrease in the normal reflectance caused by deterioration of a silver reflecting layer.

In the present invention, the ultraviolet absorber in the ultraviolet absorption layer is preferable a benzotriazol based ultraviolet absorber.

In the present invention, the stabilizer preferably comprises at least one of a phenol based antioxidant, a phosphite based antioxidant, a thiol based antioxidant, and a hindered amine based light stabilizer.

In the present invention, the lower adjacent layers is preferable a resin layer containing a corrosion inhibitor.

In the present invention, the constitution preferably comprises a gas barrier layer outside the resin base material layer. Herein, in the present invention, "outside" means a light incident side.

Further, the constitution preferably comprises a blemish prevention layer as the outermost layer in the film mirror of the present invention,.

In the present invention, a thickness of the whole layer including the resin base material layer is preferable in the range of 75 to 250 µm.

In the present invention, a method for producing the film mirror preferably comprises a step of forming the silver reflecting layer by vacuum evaporation of silver.

As a reflecting device for a solar thermal power generation comprising the film mirror according to the present invention, it is preferable to use as a reflecting device for solar thermal power generation by sticking the film mirror on other base material, especially on a metallic base material, through a sticking layer which is coated on the side of the resin base material opposite to the silver reflecting layer across the resin base material.

The present invention, the components thereof and the embodiment of the present invention will now be detailed.

### (Constitution of Film Mirror)

The film mirror of the present invention is characterized by comprising constituent layers at least comprising an ultraviolet absorption layer, a resin base material layer, a silver reflective layer, and a lower adjacent layer provided adjacently to each other in this order from a light incident side, or a film mirror comprising constituent layers comprising an ultraviolet absorption layer, a resin base material layers, an adhesive layer, a silver reflective layer, and a lower adjacent layer provided adjacently to each other in this order from a light incident side, wherein either the resin base material layer or the adhesive layer contains a stabilizer.

As a constitution layer, it is also a preferable embodiment to provide a specific functional layer such as a gas barrier layer, a blemish prevention layer, other than an adhesive layer, a silver reflecting layer and lower adjacent layer.

### (Resin base material)

As a resin base material related to the present invention, well-known various resin films can be used. For example, listed are a cellulose ester based film, a polyester based film, a polycarbonate based film, a polyarylate based film, a polysulfone (also including polyether sulfone) based film, polyester film such as polyethylene terephthalate and polyethylenenaphthalate, a polyethylene film, a polypropylene film, cellophane, a cellulose-diacetate film, a cellulose triacetate film, a cellulose-acetate-propionate film, a cellulose-acetate-butylate film, apolyvinylidene chloride film, apolyvinyl alcohol film, an ethylene vinyl alcohol film, a sydiotactic polystyrene based film, a polycarbonate film, a norbomene based resin film, a poly methyl pentene film, a polyether ketone film, a polyether ketone imido film, a polyamide film, a fluororesin film, a nylon film, a polymethylmethacrylate film, and an acrylic film. Of these, a polycarbonate based film, a polyester based film, a norbornene based resin film, and a cellulose ester based film are preferable.

Specifically it is preferable to use a polyester based film and a cellulose ester based film. The film may be manufactured by a melt-casting method or a solution casting method.

The thickness of the resin base material may be arranged as a suitable thickness according to a kind and a purpose of resin. For example, it is generally in the range of 10 - 300 µm, preferably in 20 - 200 µm, more preferably in 30 - 100 µm.

### (Adhesive Layer)

Adhesive layer according to the present invention is not specifically limited, as long as it has a function of increasing the adhesive property between a silver reflecting layer and a resin base material (resin film) but preferably comprises a resin. Therefore, to the adhesive layer, required are an adhesive property between the resin base material (resin film) and the metal reflecting layer, a heat-resistance to be borne to the heat for forming metallic reflection layer by a vapor deposition method, and smoothness for deriving high reflection performance which the metallic reflection layer originally has.

Resin as a binder used for the adhesive layer is not specifically limited, as long as it satisfies conditions of above adhesive property, heat-resistance and smoothness. Resin such as polyester based resin, acryl based resin, melamine based resin, epoxy based resin, polyamide based resin, vinyl chloride based resin, and vinyl chloride vinyl acetate copolymer based resin can be used singly or in a state of mixed resin. In view of weather resistance, mixed resin of polyester based resin and melamine based resin is preferable. It is more preferable to use a heat-curing type resin by mixing a curing agent such as isocyanate.

In view of adhesion, smoothness and reflection rate of a reflector, the thickness of the adhesive layer is preferable 0.01- 3 µm, and more preferable 0.1 - 1 µm.

As for a method for forming the adhesive layer, the conventionally well-known coating methods can be utilized such as a photogravure coating method, a reverse coating method, and a die coating method.

### <Stabilizer>

A stabilizer in the present invention refers to an antioxidant and a light stabilizer which has a function to trap or to decompose to stabilize radicals such as a peroxide radical generated by the exposure of light in the presence of oxygen. It differs from a corrosion inhibitor which forms a stable multi-complex film on the surface of a metal and prevents corrosion deterioration of metal.

As a stabilizer in the present invention, least one kind of a phenol based antioxidant, a thiol based antioxidant, a phosphite based antioxidant, and a hindered amine based light stabilizer is used.

Specific examples ofphenol based antioxidant include: 1,1, 3-tris(2-methyl 4-hydroxy-5-t-butylphenyl) butane, 2,2'-methylene bis(4-ethyl-6-t-butylphenol), tetrakis [methylene- 3-(3',5'-di t-butyl-4'-hydroxyphenyl) propionate] methane, 2,6-dit-butyl-p-cresol, 4,4'-thio bis(3-methyl-6-t-butylphenol), 4,4'-butylidene bis (3-methyl-6-t-butylphenol), 1,3,5-tris(3' ,5'-di-butyl-4'-hydroxybenzyl)-S-trazines-2,4, 6-(1H, 3H, 5H) trione, stearyl-β-(3, 5-di butyl-4-hydroxyphenyl) propionate, triethylene glycol bis [3-(3-t-butyl-5-methyl-4-hydroxy phenyl)propionate], 3,9-bis [1,1-di-methyl-2-[β-(3t-butyl-4-hydroxy-5-methyl phenyl) propionyloxy]ethyl]-2,4,8,10-tetraoxaspiro [5, 5] undecane, and 1,3,5-trimethyl-2,4,6-tris(3,5-di-butyl-4-hydroxybenzyl)benzen. Of these, a phenol based antioxidant having molecular weight of 550 or more is preferable.

Specific examples of thiol based antioxidant include: disteralyl-3,3'thiodipropionate and pentaerythritol-tetrakis(β-lauryl-thiopropionate).

Specific examples of phosphite based antioxidant include: tris (2, 4-di-butylphenyl) phosphite, distearyl pentaerythritol diphosphite, di (2, 6-di-butylphenyl) pentaerythritol diphosphite, bis- (2, 6-dibutyl-4-methylphenyl)-pentaerythritol diphosphite, tetrakis (2,4-di-butylphenyl)-4,4'-biphenylene-diphosphonite, and 2,2'-methylene bis (4, 6-di-butylphenyl) octylphosphite.

Specific examples of hindered amine based stabilizer include: bis (2,2,6,6-tetra-methyl-4-piperidyl) sebacate, bis(1,2,2,6,6-pentamethyl-4-piperidyl) sebacate, bis (1,2,2,6,6-pentamethyl-4-piperidy)-2-(3,5-di-t-butyl-4-hydroxybenzyl)-2-n-butyl malonate, 1-methyl-8-(1,2,2,6,6-pentamethyl-4-piperidyl)-sebacate, 1-[2-[3-(3,5-di-t-butyl-4-hydroxy phenyl) propionyloxy] ethyl]-4-[3-(3,5-di-t-butyl-4-hydroxy phenyl) propionyloxy]-2,2,6,6-tetra-methyl piperidine, 4-benzoyl oxy-2,2,6,6-tetra-methyl piperidine, tetrakis(2,2,6,6-tetramethyl-4-piperidyl)-1,2,3,4-butane-tetra-carboxylate, triethylenediamine, and 8-acetyl 3-dodecyl-7,7,9,9 tetra-methyl-1,3,8-triazaspiro [4,5] decane-2,4-dion.

A hindered amine based stabilizer only containing tertiary amine is preferable as light a hindered amine based stabilizer. Specifically preferred are bis (1,2,2,6,6-pentamethyl-4-piperidyl)-sebacate, bis (1,2,2,6,6-pentamethyl-4-piperidyl)-2-(3,5-di-t-butyl-4-hydroxybenzyl)-2-n-butyl malonate, or condensate of 1,2,2,6,6-pentamethyl-4-pipedinol/ tridecyl alcohol and 12,3,4-butane tetra carboxylic acid.

Further, as nickel based ultraviolet stabilizer, [2,2'-thio bis (4-t-octylphenolate)] 2-ethylhexylamine nickel (II), nickel complex-3,5-di-t-butyl-4-hydroxybenzyl phosphoric acid mono-ethylate, and nickel dibutyl dithio carbamate are applicable.

The total addition amount of these stabilizers is preferable 0.1% by mass or more and 10% by mass or less based on the resin base material. When an addition amount is less than 0.1% by mass, resin itself may not affect an effect of preventing an oxidation deterioration, and may not prevent the corrosion of silver layer adjacent to the resin. Moreover, when the total addition amount of the stabilizer exceeds 10% by mass based on the resin base material, it may occur a bleeding of stabilizer (also referred to as bleed out) and may cause decline in permeability as well as resulting in disfigurement of a product.

As to a method for adding these stabilizers, a resin may be heat-melted and knead-dispersed by using an equipment such as two-axis kneading machine in this state, or stabilizer may be added to a resin dissolved in a solvent, and after mixing and dispersing, the solvent may be removed away.

Moreover, when these stabilizers are added to the adhesive layer, a total addition amount of these stabilizers is preferable 0.1% by mass or more and 10% by mass or less based on the adhesive layer. When an addition amount is 0.1% by mass or more, the adhesive layer itself may fully affect an effect for preventing an oxidation deterioration and may prevent the corrosion of silver layer adjacent to the resin. Moreover, when the total addition amount of the stabilizer is 10% by mass or less based on the adhesive layer, it results in less bleed out of stabilizer and may not occur a decrease of adhesion force with silver layer or peeling off. As a method for adding these stabilizers to the adhesive layer, mentioned is a method in which a stabilizer is added in a cured type resin monomer and cured after mixing-dispersing.

### (Ultraviolet absorption layer)

As a resin as a binder used for the ultraviolet absorption layer, resin such as polyester based resin, acryl based resin, melamine based resin, epoxy based resin is applicable singly or in combination. In view of weather resistance, polyester based resin and acryl based resin are preferable, and more preferable is a heat-curable resin in which a hardening agent such as isocyanate is further mixed.

The conventional various isocyanates such as TDI (tolylene diisocyanate) based, XDI (xylene diisocyanate) based, MDI (methylene diisocyanate) based, and HMDI (hexamethylene diisocyanate) based isocyanates are applicable. In view of weather resistance, it is preferable to use XDI based, MDI based, and HMDI based isocyanates.

As a method for forming an ultraviolet absorption layer, conventionally well-known coating methods such as a gravure coating method, a reverse coating method and a die coating method are applicable.

### (Ultraviolet absorber)

Ultraviolet absorbers in the ultraviolet absorption layer include benzophenone based, benzotriazol based, phenyl salicylate based, triazine based ultraviolet absorber.

Specific examples of a benzophenone based ultraviolet absorber include: 2,4-dihydroxy-benzophenone, 2-hydroxy-4-methoxy benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy benzophenone, 2,2'-dihydroxy-4,4'-dimethoxy benzophenone, and 2,2,4,4'-tetra-hydroxy benzophenone.

Specific examples of a benzotriazol based ultraviolet absorber include: 2-(2'-hydroxy-5-methyl phenyl) benzotriazol, 2-(2'-hydroxy-3',5'-di-t-butyl phenyl) benzotriazol, and 2-(2'-hydroxy-3'-t-butyl-5'-methyl phenyl) benzotriazol.

Specific examples of a phenyl salicylate based ultraviolet absorber include: phenyl salicylate, and 2-4-di-t-butylphenyl-3,5-di-t-butyl-4-hydroxy benzoate. Specific example of a hindered amine based ultraviolet absorber includes bis (2,2,6,6-tetra-methyl piperidine-4-yl) sebacate.

Specific examples of a triazine based ultraviolet absorber include: 2,4-diphenyl-6-(2-hydroxy-4-methoxyphenyl)-1,3,5-triazine, 2,4-diphenyl-6-(2-hydroxy4-ethoxyphenyl)1,3,5-triazine, 2,4-diphenyl-2-hydroxy-4-propoxy phenyl)-1,3,5-triazine, 2,4-diphenyl (2-hydroxy-4-butoxyphenyl)-1,3,5-triazine, 2,4-diphenyl-6-(2-hydroxy4-butoxyphenyl)-1,3,5-triazine, 2,4-diphenyl-6-(2-hydroxy-4-hexyloxyphenyl)-1,5-triazine, 2,4-diphenyl-6-(2-hydroxy-4-octyloxyphenyl)-1,3,5-triazine, 2,4-diphenyl-6-(2-hydroxy-4-dodecyloxy-phenyl)-1,3,5-triazine, and 2,4-diphenyl-6-(2-hydroxy-4-benzyloxy-phenyl)-1,3,5-triazine.

In the present invention, benzotriazol based ultraviolet absorber is suitably used in view of preventing deterioration of a resin base material layer.

In addition to above compounds, ultraviolet absorber contains a compound having a function to transduce an energy of ultraviolet radiation into an intermolecular vibrational energy and then to release the vibrational energy as a heat energy. Furthermore, a compound which has an effect in combination with an antioxidant or a colorant, or a light stabilizer called a quencher which acts as a light energy conversion agent can be used together. However, to use the above-mentioned ultraviolet absorber, it is needed to choose ones in which an optical absorption wavelength of the ultraviolet absorber does not overlap with the effective wavelength of a photopolymerization initiator.

When using the usual ultraviolet radiation inhibitor, it is effective to use the photopolymerization initiator which generates a radical in visible light.

An amount of the ultraviolet absorber is 0.1 - 20% by mass, preferably 1 - 15% by mass, more preferably 3 -10% by mass. In a case of exceeding 20% by mass, adhesion becomes worse, and in a case of 0.1% by mass or less, the weather resistance improvement effect is small.

### (Silver reflecting layer)

As a method for forming the silver reflecting layer concerning the present invention, both of a wet and a dry method can be used.

A wet method is a general term for a plating method, and is a method of depositing a metal from a solution and forming a film. Specific example includes a silver mirror reaction

On the other hand, a dry method is a general term for a vacuum-film-formation method. Specific example includes: a resistance heating type vacuum deposition method, an electron-beam-heating type vacuum deposition method, an ion plating method, an ion beam assistant vacuum deposition method, and a sputtering technique. Of these, the vacuum deposition method in which a film can be formed continuously via roll to roll process is especially preferably used for the present invention. That is, as a production method of the film mirror for the present invention, preferred is a production method which has a process of forming the silver reflecting layer by the silver vacuum evaporation.

In view of a reflectance, a thickness of the silver reflecting layer is preferably 10 - 200 nm, and more preferably 30 - 150 nm.

In the present invention, from the purpose for preventing deterioration of the silver reflecting layer by oxygen or moisture, a silver reflecting layer preferably locates in the opposite side of the light incidence side to a resin base material layer.

### (Lower adjacent layers)

The lower adjacent layer used for the film mirror of the present invention locates the opposite side of a resin base material (support) through a silver reflecting layer, and contributes to blemish prevention of a silver reflecting layer as well as preventing silver corrosion deterioration. The lower adjacent layer preferably contains a corrosion inhibitor.

As a resin as a binder used for the lower adjacent layer, resin such as polyester based resin, acryl based resin, melamine based resin, epoxy based resin is applicable singly or in combination. In view of weather resistance, polyester based resin and acryl based resin are preferable, and more preferable is a heat-curable resin in which a hardening agent such as isocyanate is further mixed.

The conventional various isocyanates such as TDI (tolylene diisocyanate) based, XDI (xylene diisocyanate) based, MDI (methylene diisocyanate) based, and HMDI (hexamethylene diisocyanate) based isocyanates are applicable as isocyanate. In view of weather resistance, it is preferable to use XDI based, MDI based, and HMDI based isocyanate.

As a method for forming a lower adjacent layer, conventionally well-known coating methods such as a gravure coating method, a reverse coating method and a die coating method are applicable.

### (Corrosion inhibitor)

Herein, "corrosion" refers to as a phenomenon in which a metal (silver) is chemically or electrochemically corroded by an environmental substance or deteriorated in quality of the material (refer to JIS Z 0103-2004)..

Although the optimum amount changes with compounds, generally a content of a corrosion inhibitor is preferable in the range of 0.1 - 1.0 g/m².

Corrosion inhibitor to silver is preferably selected from at least one kind or a mixture thereof of followings: amine and derivative thereof, compound having pyrrole ring, compound having triazole ring, compound having pyrazole ring, compound having thiazole ring, compound having imidazole ring, compound having indazole ring, copper chelate compounds, thioureas, compound having mercapto group and naphthalene based compound.

Specific examples of amine and a derivative thereof include: ethylamine, lauryl amine, tri-n-butylamine, o-toluidine, diphenylamine, ethylenediamine, diethylenetriamine, triethylenetetramine, tetraethylenepentamine, monoethanolamine, diethanolamine, triethanolamine, 2N-dimethylethanolamine, 2-amino-2-methyl-1,3-propanediol, acetamide, acrylamide, benzamide, p-ethoxy chrysoidine, dicyclohexyl ammonium nitride, dicyclohexyl ammonium salicylate, monoethanolamine benzoate, dicyclohexyl ammonium benzoate, diisopropyl ammonium benzoate, a diisopropyl ammonium nitride, cyclohexylamine carbamate, nitronaphthalene ammonium nitride, cyclohexylamine benzoate, dicyclohexyl ammonium cyclohexane carboxylate, a cyclohexylamine cyclohexane carboxylate, dicyclohexyl ammonium acrylate, a cyclohexylamine acrylate, or mixture thereof.

Specific examples of compound having a pyrrole ring include: N-butyl- 2,5-dimethyl pyrrole, N-phenyl-2,5 dimethyl pyrrole, N-phenyl-3-formyl-2,5-dimethyl pyrrole, and N-phenyl-3,4-diformyl-2,5-dimethyl pyrrole or mixture thereof.

Specific examples of compound having triazole ring include: 1,2,3-triazole, 1,2,4-triazole, 3-mercapto-1,2,4-triazole, 3-hydroxy-1,2,4-triazole,3-methyl-1,2,4-triazole, 1-methyl-1,2,4-triazole, 1-methyl-3-mercapto-1,2,4-triazole, 4-methyl-1,2,3-triazole, benzotriazol, tolyl triazole, hydroxy benzotriazol, 4,5,6,7-tetrahydro triazole, 3-amino-1,2,4-triazole, 3-amino-5-methyl-1,2,4-triazole, carboxy benzotriazol, 2-(2'-hydroxy 5'-methylphenyl) benzotriazol, 2-(2'-hydroxy-5'-tert-butylphenyl) benzotriazol, 2-(2'-hydroxy-3',5'-di-tert-butylphenyl) benzotriazol and 2-(2'-hydroxy-4-octoxyphenyl) benzotriazol or mixture thereof

Specific examples of compound having pyrazole ring include: pyrazole, pyrazoline, pyrazolone, pyrazolidine, pyrazolidone, 3,5-dimethyl pyrazole, 3-methyl-5-hydroxy pyrazole, and 4-amino pyrazole, or mixture thereof

Specific examples of compound having thiazole ring include: thiazole, thiazoline, thiazolone, thiazolidine, thiazolidone, iso thiazole, benzothiazole, 2-N,N-diethyl thiobenzothiazole, p-dimethylamino benzal rhodanine, and 2-mercaptobenzothiazole, or mixture thereof.

Specific examples of compound having imidazole ring include: imidazole, histidine, 2-heptadecyl-imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydromethyl imidazole, 2-phenyl-4, 5-dihydroxymethyl imidazole, 4-formyl imidazole, 2-methyl-4-formyl imidazole, 2-phenyl-4-formyl imidazole, 4-methyl-5-formyl imidazole, 2-ethyl-4-methyl-5-formyl imidazole, 2-phenyl 4-methyl-4-formyl imidazole, and 2-mercapto benzimidazole, or mixture thereof

Specific examples of compound having indazole ring include: 4-chloroindazole, 4-nitro indazole, 5-nitro indazole, and 4-chloro- 5-nitro indazole, or mixture thereof.

Specific examples of copper chelate compounds include: acetylacetone copper, ethylenediamine copper, phthalocyanine copper, ethylenediamine tetra-acetate copper, and hydroxyquinoline copper, or mixture thereof.

Specific examples of thioureas include: thiourea and guanylthiourea, or mixture thereof.

By also adding the material already indicated above, specific examples of compound having mercapto group include: mercaptoacetic acid, thiophenol, 1,2-ethanediol, 3-mercapto-1,2,4-triazole, 1-methyl-3-mercapto-1,2, -triazole, 2-mercaptobenzothiazole, 2-mercapto benzimidazole, glycol dimercaptoacetate, and 3-mercapto propyl trimethoxy silane, or mixture thereof.

Specific example of naphthalene based compound includes thionalide.

### (Gas barrier layer)

The gas barrier layer according to the present invention is used to prevent deterioration of the resin base material and the various functional elements protected by the resin base material from a change of humidity, especially from high humidity. As long as it may maintain above features, the gas barrier layer may have special function or usage, and various modes of gas barrier layer may be applicable. In the present invention, it is preferable to prepare a gas barrier layer on the upper side of the above-mentioned lower adjacent layer.

As dampproofing of the gas barrier layer, it is preferable to control the dampproofing of the gas barrier layer so that a steam transmittance in 40 °C, RH 90% is 100 g/m2·day/µm or less preferably 50 g/m2·day/µm or less, more preferably 20 g/m2 day/µm or less. Further, oxygen transmittance is preferable 0.6 m1/m2/day/atm or less under a condition of temperature of 23 °C, 90% RH.

A method for forming the gas barrier layer according to the present invention is not specifically limited, however it is preferable to apply a method in which a ceramic precursor of an inorganic oxide film is coated and then an inorganic oxide film is formed by heating and/or irradiating ultraviolet to the coated film.

### <Ceramic precursor>

The gas barrier layer according to the present invention can be formed by applying general heating method after coating a ceramic precursor for forming an inorganic oxide film, but preferably by applying a local heating. The ceramic precursor is preferable sol-state organometallic compound or polysilazane.

### <Organometallic compound>

The organometallic compound according to the present invention preferably contains at least one element of silicon (Si), aluminum (Al), lithium (Li), zirconium (Zr), titanium (Ti), a tantalum (Ta), zinc (Zn), barium (Ba), indium (In), tin (Sn), lanthanum (La), yttrium (Y), and niobium (Nb). It is preferable that the organometallic compound contains at least one element of silicon (Si), aluminum (Al), lithium (Li), zirconium (Zr), titanium (Ti), zinc (Zn), and barium (Ba). Furthermore, it is preferably to contain at least one element of silicon (Si), aluminum (Al), and lithium (Li).

An organometallic compound is specifically limited as long as it is possible to hydrolysis, but metal alkoxide is mentioned as a preferable organometallic compound.

The above-mentioned metal alkoxide is represented by Formula (1).

Formula (1): MR.²ₘ(OR¹)_{Hn-m}

In Formula (1), M represents a metal having oxidation number n. R¹ and R² each represents an alkyl goup independently m represents an integer of 0 to (n-1). R¹ and R² may be the same or differ. As R¹ and R², preferable is an alkyl group having four or less carbon atoms, and more preferable is a lower alkyl group such as methyl group CH₃ (hereinafter refer to as Me), ethyl group C₂H₅ (hereinafter refer to as Et), propyl group C₃H₇ (hereinafter refer to as Pr), isopropyl group i-C₃H₇ (hereinafter refer to as i-Pr), butyl C₄H₉ (hereinafter refer to as Bu), and isobutyl group i-C₄H₉ (hereinafter refer to as i-Bu).

Specific examples of the metal alkoxide represented by Formula (1) include: lithium ethoxide LiOEt, niobium ethoxide Nb(OEt)₅, magnesium isopropoxide Mg(OPr-i)₂, aluminum isopropoxide Al(OPr-i)₃, zinc propoxide Zn(OPr-i)₂, tetraethoxy silane Si(OEt)₄, titanium isopropoxide Ti(OPr-i)₄, barium ethoxide Ba(OEt)₂, barium isopropoxide Ba(OPr-i)₂, triethoxy borane B(OEt)₃, zirconium propoxide Zn(OPr)₄, lanthanum propoxide La(OPr)₃, yttrium propoxide Y(OPr)₃, and lead isopropoxide Pb(OPr-i)₂. Each of these metal alkoxide is available on the market and can be obtained easily. Moreover, the low condensate obtained by partially hydrolyzing metal alkoxide is also marketed, and it is also possible to use this as a raw material.

### <Inorganic oxide>

The inorganic oxide according to the present invention is characterized by being formed by local heating from the sol which uses the above-mentioned organometallic compound as a raw material. Therefore, it is characterized by being an oxide of elements such as silicon (Si), aluminum (Al), zirconium (Zr), titanium (Ti), tantalum (Ta), zinc (Zn), barium (Ba), indium (In), tin (Sn), and niobium (Nb) which are contained in the organometallic compound,.

For example, they are silicon oxide, aluminum oxide, or zirconium oxide. Of these, silicon oxide is preferable.

In the present invention, as a method of forming an inorganic oxide from an organometallic compound, it is preferable to apply a so-called sol-gel method and a method of coating poly silazane.

### <Sol-gel method>

Herein, "Sol-gel method" refers to as a method for preparing metal oxide glass having a fixed form (such as film, grain, or fiber) in which sol of hydroxide is obtained by hydrolyzing an organometallic compound, then it is dehydrated into gel, further followed by heat-treating the gel. Further, a multi component metal oxide glass can be prepared by a method of mixing several different sol solutions, or a method of adding other metal ion.

Specifically, it is preferable to prepare an inorganic oxide by a sol-gel method having following steps.

Namely, it is especially preferable to manufacture by a sol-gel method which comprises a process of obtaining a reaction product by hydrolysis and dehydration condensation of organometallic compound in a reaction liquid containing at least water and organic solvent by using halogen ion as a catalyst under existence of boron ion, while adjusting pH in 4.5 - 5.0; and process of heating and vitrifying the reaction product at a temperature of 200°C or less, in view that heat treatment with high temperature does not cause micropores, or deterioration of the film.

In the above-mentioned sol-gel method, an organometallic compound used as a raw material is not particularly limited as long as it can be hydrolyzed, but the above-mentioned metal alkoxide is mentioned as preferable organometallic compound.

In the above-mentioned sol-gel method, the above-mentioned organometallic compound may be used for a reaction as it is, but it is preferable to use it by diluting with a solvent in order to control a reaction easily. A solvent which can dissolve the above-mentioned organometallic compound and can be uniformly mixed with water is applicable to the solvent for dilution. Specific examples of the solvent for dilution preferably used are: aliphatic lower alcohol, methanol, ethanol, propanol, isopropanol, butanol, isobutanol, ethylene glycol, propylene glycols, and mixtures thereof. Moreover, the mixed solvent ofbutanol, cellosolve, and butyl cellosolve or the mixed solvent of xylol, cellosolve acetate, methyl isobutyl ketone, and cyclohexane can also be used.

In the above-mentioned organometallic compound, when metals are Ca, Mg, Al, it reacts with water in a reaction liquid and generates hydroxide, or when carbonate ion CO₃²⁻ exists, it forms carbonate and precipitate. Therefore, it is preferable to add alcoholic solution of triethanolamine as a masking reagent in the reaction liquid. When the above-mentioned organometallic compound is mixed and dissolved into a solvent, concentration of organometallic compound is preferable 70% by mass or less, more preferable to use by diluting in the range of 5 - 70% by mass.

The reaction liquid used in the above-mentioned sol-gel method contains at least water and an organic solvent. The above-mentioned organic solvent may form a uniform solution with water, acid or alkali. Generally listed are the same species as aliphatic lower alcohols used for dilution of the above-mentioned organometallic compound. In above-mentioned aliphatic lower alcohol, propanol, isopropanol, butanol, and isobutanol having more carbon numbers than methanol and ethanol are preferably used. It is because that growth of the formed metal oxide glass film is stable. In the above-mentioned reaction liquid, concentration of water is preferable in the range of 0.2 - 50 mol/L.

In the above-mentioned sol-gel method, an organometallic compound is hydrolyzed by a halogen ion as a catalyst under existence of boron ion in the above-mentioned reaction liquid. As a compound which gives above-mentioned boron ion B3+, trialkoxy borane B(OR)₃ is preferably listed. Of these, triethoxy borane B(OEt)₃ is more preferable. Moreover, B3+ ion concentration in the above-mentioned reaction liquid is preferable in the range of 1.0 - 10.0 mol/L.

As the above-mentioned halogen ion, a fluorine ion and/or chlorine ion are preferably listed. That is, fluorine ion and chlorine ion may be used singly or in mixture. Compound which can generate a fluorine ion and/or chlorine ion in the above-mentioned reaction liquid may be applicable. For example, preferably listed are ammonium hydrogen fluoride NH₄HF·HF and sodium fluoride NaF as a fluorine ion source, and ammonium chloride NH₄Cl as a chlorine ion source.

Concentration of the above-mentioned halogen ion in the above-mentioned reaction liquid depends on a film thickness comprising an inorganic composite having an inorganic matrix and other conditions, but generally it is in the range of 0.001 - 2 mol/kg, especially preferable 0.002 - 0.3 mol/kg based on the total mass of the above-mentioned reaction liquid including a catalyst. When concentration of a halogen ion is lower than 0.001 mol/kg, a hydrolysis of an organometallic compound will become difficult to be fully carried out and film formation will become difficult. When concentration of halogen ion exceeds 2 mol/kg, formed inorganic matrix (metal oxide glass) tends to become uneven. Thus, neither case is undesirable.

When boron used during reaction is designed to be remained in a composition of an obtained inorganic matrix as B₂O₃ component, the resultant may be used as product with the organic boron compound according to the added content. When boron has to be eliminated, after forming film, the film is heated under an existence of methanol as solvent or immersed in methanol, thereby boron can be evaporated and removed as boron methyl ester.

In the process of obtaining a reaction product by hydrolysis and dehydration condensation of the organometallic compound, a base compound solution is prepared by mixing and dissolving a predetermined quantity of the above-mentioned organometallic compound into a mixed solvent containing predetermined quantity of water and predetermined quantity of organic solvent. The base compound solution and predetermined quantity of a reaction liquid containing predetermined quantity of the halogen ion are mixed by a predetermined ratio and fully agitated to a uniform reaction solution. Then, pH of a reaction solution is adjusted to the desired value by using acid or alkali, and after riping for several hours, the reaction product is obtained. Predetermined quantity of the above-mentioned boron compound is preliminary mixed and dissolved in the base compound solution or the reaction liquid Moreover, when using alkoxy boran, it is advantageous to dissolve in the base compound solution with other organometallic compounds.

pH of the above-mentioned reaction liquid is chosen by the purpose. When the purpose is a film formation which comprised an inorganic composite having an inorganic matrix (metal oxide glass), it is preferable to adjust pH in the range of 4.5 - 5, for example, by using acids, such as hydrochloric acid and followed by riping. In this case, it is convenient to use, for example, a mixture of methyl red and bromocresol green as an indicator.

Further, in the above-mentioned sol-gel method, a reaction product can also be manufactured easily and continuously by adding the base composition solution and the reaction liquid (including B3+ and halogen ion) which has the same component with the same concentration one by one at same rate, while adjusting to predetermined pH. Herein, concentration of the above-mentioned reaction solution can be changed in the range of±50% by mass, concentration of water (including acid or alkali) can be changed in the range of±30% by mass and concentration of a halogen ion can be changed in the range of ±30% by mass.

Next, the reaction product prepared via previous process (the reaction solution after ripning) is heated to the temperature of 200 °C or less, and dried and vitrified. It is preferable to raise a temperature gradually and carefully especially in the temperature range of 50 - 70 °C, and after passing through a predrying (solvent vaporization) process, further to raise a temperature. In a case of film formation, this drying process is important to obtain the film with non-pores. After the predrying process, it is preferable to heat and dry at a temperature of 70 - 150 °C, more preferable 80 - 130 °C.

### <Method for coating polysilazane>

The gas barrier layer according to the present invention preferably contains an inorganic oxide formed by local heating of a coated film after coating a ceramic precursor which forms an inorganic oxide film by heating.

When the ceramic precursor contains a polysilazane, it is preferable to apply a method for forming a transparent coated film like glass on the resin base material comprising steps of: covering a the resin base material with a solution which includes poly silazane represented by Formula (I) and a catalyst if needed in the organic solvent, removing the solvent by evaporation to leave a polysilazane layer having a thickness of 0.05 - 3.0 µm on the resin base material, and local heating the polysilazane layer in the atmosphere containing a steam under existence of oxygen, active oxygen, in some case, and nitrogen.

Formula (I): -(SiR₁R₂-NR₃)ₙ-

In above Formula, R₁, R₂, and R₃ may be the same or differ and each independently represents hydrogen or a group which is substituted depending on the case selected from a group of alkyl group, aryl group, vinyl group or (trialkoxy silyl) alkyl group; preferably hydrogen, methyl, ethyl, propyl, isopropyl, butyl, iso-butyl, tert-butyl, phenyl, vinyl, or 3-(trimethoxy silyl) propyl, 3- (triethoxy silyl propyl) group; n is an integer and is arranged so that the polysilazane has a number average molecular weight of 150 - 150,000 g/mol.

As a catalyst, basic catalyst especially N, N-diethyl ethanolamine, N, N-dimethylethanolamine, triethanolamine, triethylamine, 3-morpholino propyl amine, or N-heterocyclic compound is preferably used. Concentration of catalyst is generally in the range of 0.1 - 10 mol %, preferably 0.5 - 7 mol% based on polysilazane.

In one of the preferable embodiments, used is a solution containing perhydropolysilazane in which all of R₁, R₂ and R₃ are hydrogen atoms.

In one of the other preferable embodiments, the coating solution by the present invention contains at least one kind of polysilazane represented by Formula (II).

Formula (II): -(SiR₁R₂-NR₃)ₙ-(SiR₄R₅-NR₆)ₚ-

In above Formula, R₁, R₂, R₃, R₄, R₅, and R₆ each independently represent hydrogen or alkyl group, aryl group, vinyl group or (trialkoxy silyl) alkyl group which is substituted depending on the case; n and p are integers and n is arranged so that the polysilazane has a number average molecular weight of 150-150,000 g/mol.

Especially preferable is a compound in which R₁, R₃ and R₆ each represents hydrogen and R₂, R₄, and R₅ each represents methyl group; a compound in which R₁, R₃ and R₆ each represents hydrogen, R₂, R₄, and R₅ each represents methyl group and R₅ represents vinyl group; and a compound in which R₁, R₃, R₄ and R₆ each represents hydrogen, and R₂ and R₅ each represents methyl group.

Moreover, the solution containing at least one kind of polysilazane represented by Formula (III) is also preferable.

Formula (III): -(SiR₁R₂-NR₃)ₙ-(SiR₄R₅-NR₆)ₚ-(SiR₇R₈-NR₉)_{q}-

In above Formula, R₁, R₂, R₃, R₄, R₅, R₆, R₇, R₈, and R₉ each independently represent hydrogen or alkyl group, aryl group, vinyl group or (trialkoxy silyl) alkyl group which is substituted depending on the case; n and p are integers and n is arranged so that the polysilazane has a number average molecular weight of 150-150,000 g/mol.

Especially preferable is a compound in which R₁, R₃ and R₆ each represents hydrogen, and R₂, R₄, R₅ and R₈ each represents methyl group and R₉ represents (triethoxy silyl) propyl group and R₇ represents alkyl group or hydrogen.

Concentration of polysilazane in a solution is generally in the range of 1 - 80% by mass, preferably 5 - 501% by mass, especially preferable 10 - 40% by mass.

Especially preferable is a solvent which does not contain water and reactive group (for example, hydroxyl group or amine group) and is organic and non-protonic solvent inert to polysilazane. For example, listed are aliphatic or aromatic hydrocarbon, halogen hydrocarbon, esters such as ethyl acetate or butyl acetate, ketones such as acetone or methyl ethyl ketone, ethers such as tetrahydrofuran or dibutyl ether, and mono- and poly- alkyleneglycol dialkyl ether (diglymes), or mixture thereof.

An additional component to above mentioned polysilazane solution may be another binder commonly used in production of the coating material. For example, listed are cellulose ether and cellulose ester such as ethyl cellulose, cellulose nitrate, cellulose acetate or cellulose acetobutyrate, natural resin such as rubber or rosin resin, or synthetic resin such as polymerization resin or condensation resin, such as aminoplast especially urea resin and melamine formaldehyde resin, alkyd resin, acryl resin, polyester or modified polyester, epoxide, poly isocyanate or blocked polyisocyanate, orpolysiloxane.

Another component of polysilazane composition may be additives or inorganic nano particles such as SiO₂, TiO₂, ZnO, ZrO₂, or Al₂O₃, which affects, for example, viscosity of a composition, wettability to a ground, film forming property, lubrication or exhaust gas property.

By using the method of the present invention, dense and glass like layer can be produced which has excellent barrier function to gas due to no existence of cracks and pores.

A thickness of the formed coating layer is preferable in the range of 100 nm - 2 µm.

### (Blemish prevention layer)

In the present invention, a blemish prevention layer can be prepared as an outermost layer of a film mirror. The blemish prevention layer is prepared for preventing blemish.

The blemish prevention layer can be constituted by acryl based resin, urethane based resin, melamine based resin, epoxy based resin, organic silicate compound, and silicone based resin. Of these, in view of hardness and durability, silicone based resin and acryl based resin are preferable. Further, in view of curability, flexibility and productivity, actinic energy curable acryl based resin or heat curable acryl based resin is preferable.

Actinic energy curable acryl based resin or heat curable acryl based resin is a composite which contains a multi functional acrylate, an acryl oligomer, or reactive diluent as a polymerization curable component. In addition, a photo initiator, a photosensitizer, a thermal polymerization initiator or a modifier may be applicable if appropriate.

Acrylic oligomer includes a compound having a reactive acryl group bonded to a skelton of acryl based resin, as well as polyester acrylate, urethane acrylate, epoxy acrylate, a polyether acrylate. Further, a compound in which acryl group bonds to a rigid skelton such as melamine and isocyanuric acid may be applicable.

Moreover, the reactive diluent has a function of a solvent in a coating process as a medium in a coating liquid, as well as itselfhas a group which reacts with monofunctional or polyfunctional acryl oligomer, and becomes a copolymerization component of a coating film.

As a multi functional acryl based curable coating material marketed, Mitsubishi Rayon Co., Ltd. (such as trade name "Dia Beam" series), Nagase & Co., Ltd. (such as trade name " DENACOL" series), Shin-nakamura Chemical Co., Ltd. (such as trade name "NK ester" series), DIC Corp; (such as trade name "UNIDIC" series), Toagosei Co., Ltd. (such as trade name " ARONIX" series), Nippon Oil & Fats Co., Ltd. (such as trade name "BLEMMER" series), Nippon Kayaku Co., Ltd. (such as trade name "KAYARAD" series), and Kyoeisha chemical Co., Ltd (such as trade name "light ester" series and "light acrylate" series), can be used.

In the present invention, various kinds of additives can be blended into a blemish prevention layer if appropriate; as long as an effect of the present invention is not impaired. For example, stabilizers such as antioxidant, light stabilizer and ultraviolet absorber, surfactant, leveling agent, antistatic agent can be used.

In case of coating functional layers, a leveling agent is especially effective for reducing surface unevenness. For example, as silicone based leveling agent, dimethyl polysiloxane -polyoxyalkylene copolymer (for example, SH190 produced by Dow Coming Toray Co., Ltd.) is suitable.

### (Thickness of whole Film mirror)

In view of prevention of bend, normal reflectance and handling of mirror, thickness of a whole film mirror according to the present invention is preferable 75 - 250 µm, more preferable 90 - 230 µm and still more preferable 100 - 220 µm.

### (Reflecting device for Solar thermal power generation)

The film mirror of the present invention can be preferably used to the purpose of condensing sunlight. The film mirror may be used singly as a sunlight collection mirror, but it is preferable to use as a reflecting device for solar thermal power generation by sticking the film mirror on other base material, especially on a metallic base material, through an adhesive layer which is coated across the resin base material on the side of the resin base material opposite to the silver reflecting layer.

When the reflecting device is used to the solar thermal power generation, an embodiment is a configuration in which the reflecting device has a form of a gutter (half cylindrical), the cylindrical component having a fluid inside is provided in the center section of a semicircle, the internal fluid is heated by condensing sunlight to a cylindrical component, and the heat energy is changed to generate electricity. Moreover, other embodiment includes a configuration in which plate-like reflecting devices are provided in plural places, the sunlight reflected with each reflecting device is condensed to one reflecting mirror (central reflecting mirror), and the heat energy obtained by reflection with a reflecting mirror is changed to generate electricity in a power generation part. Since high normal reflectance is required to the used reflecting device, the film mirror of the present invention is used especially preferably in the latter embodiment.

### EXAMPLES

Hereafter, although specific examples of the present invention are described, the present invention is not limited to these examples. Incidentally, the expression of "part" or "%" referred to in Examples represents "part by mass" or "% by mass" unless otherwise specified.

### [Comparative example 1]

As a resin base material, biaxially-stretched polyester film (polyethylene terephthalate film, thickness of 100 µm) was used. On one side of the above-mentioned polyethylene terephthalate film, formed was a silver reflecting layer having thickness of 80 nm by a vacuum deposition method as a silver reflecting layer. On the silver reflecting layer, mixed resin of polyester based resin (polyethylene terephthalate) and TDI (tolylene diisocyanate) based isocyanate (2, 4-tolylene diisocyanate) with a solid content ratio of 10 : 2 was coated by a gravure coating method to form a lower adjacent layer with 0.1 µm thickness. Further, on another side of the above-mentioned polyethylene terephthalate film, a liquid was coated and dried which comprised 15 parts of Diabeam UR6530 (Mitsubishi Rayon Co., Ltd.) as ultraviolet curable resin, 1 part of DAROCUR 1700(BASF Japan) as a photopolymerization initiator, 25 parts of ethyl acetate, 35 parts of butyl acetate, and 10 parts of cyclohexanone. Then, irradiated by ultraviolet radiation with a high pressure mercury vapor lamp, a surface coat layer with 5 µm thickness was formed and Comparative example 1 was prepared.

### [Comparative example 2]

When forming a surface coat layer, Comparative example 2 was prepared in the same manner as Comparative example 1, except for using a liquid which comprised 15 parts of Diabeam UR6530 (Mitsubishi Rayon Co., Ltd.) as ultraviolet curable resin, 1 part of DAROCUR 1700(BASF Japan) as a photopolymerization initiator, 25 parts of ethyl acetate, 35 parts of cyclohexanone, and 1 part of TINUVIN 928 (BASF Japan) as a benzotriazol based ultraviolet absorber.

### [Comparative example 3]

Comparative example 3 was prepared in the same manner as Comparative example 1, except for using a biaxially-stretched polyester film (thickness of 100 µm) obtained by adding 1 % by mass of IRGANOX 1010 (BASF Japan) as a phenol based antioxidant to a polyethylene terephthalate as a resin base material layer.

### [Example 1]

As a resin base material layer, a biaxially-stretched film (thickness of 100 µm) was used which was obtained by adding 1% by mass of IRGANOX 1010 (BASF Japan) as a phenol based antioxidant to a polyethylene terephthalate as a resin base material layer. On one side of the above-mentioned polyethylene terephthalate film, formed was a silver reflecting layer having thickness of 80 nm by a vacuum deposition method as a silver reflecting layer. On the silver reflecting layer, mixed resin of polyethylene terephthalate and 2,4-tolylene diisocyanate with a solid content ratio of 10 : 2 was coated by a gravure coating method to form a lower adjacent layer with 0.1 µm thickness. Further, on another side of the above-mentioned polyethylene terephthalate film, a liquid was coated and dried which comprised 15 parts of Diabeam UR6530 (Mitsubishi Rayon Co., Ltd.) as ultraviolet curable resin, 1 part of DAROCUR 1700(BASF Japan) as a photopolymerization initiator, 25 parts of ethyl acetate, 35 parts of cyclohexanone and 1 part of TINUVIN 928 (BASF Japan) as a benzotriazol based ultraviolet absorber. Then, irradiated by ultraviolet radiation with a high pressure mercury vapor lamp, a surface coat layer (ultraviolet absorption layer) with 5 µm thickness was formed and Example 1 was prepared.

### [Example 2]

Example 2 was prepared in the same manner as Example 1, except for using 1 part of a benzophenone based ultraviolet absorber CHIMASSORB 81 (BASF Japan), instead of a benzotriazol based ultraviolet absorber contained in the ultraviolet absorption layer of Example 1.

### [Example 3]

Example 3 was prepared in the same manner as Example 1, except for using 1 part of a triazine based ultraviolet absorber TINUVIN 1577FF, instead of a benzotriazol based ultraviolet absorber contained in the ultraviolet absorption layer of Example 1.

### [Example 4]

Example 4 was prepared in the same manner as Example 1, except for using 1% by mass of CHIMASSORB 944FDL(BASF Japan) as HALS (hindered amine based light stabilizer), instead of the phenol based antioxidant contained in the resin base material layer of Example 1.

### [Example 5]

Example 5 was prepared in the same manner as Example 1, except for using 1% by mass of IRGAFOS12 (BASF Japan) as a phosphite based antioxidant, in combination with 1 % by mass of the phenol based antioxidant contained in the resin base material layer of Example 1.

### [Example 6]

Example 6 was prepared in the same manner as Example 1, except for using 1% by mass of IRGANOX PS800FL (BASF Japan) as a thiol based antioxidant, in combination with 1 % by mass of the phenol based antioxidant contained in the resin base material layer of Example 1.

### [Example 7]

Example 7 was prepared in the same manner as Example 1, except for using 1 % by mass of CHIMASSORB 944FDL (BASF Japan) as HALS, in combination with 1 % by mass of the phenol based antioxidant contained in the resin base material layer of Example 1.

### [Example 8]

On an adjacent outside of the surface coat layer of Example 1, 3% solution of perhydropolysilazane in dibutyl ether (NL120 produced by Clariant) was coated by a bar coating method to form a layer having a thickness of 100 nm after drying. By annealing at 90 °C for 30 minutes to form a gas barrier layer, the sample of Example 8 was prepared.

### [Example 9]

A coating liquid for a blemish prevention layer was prepared by diluting a commercially available hard court agent (OPSTAR Z7534 (registered trademark) produced by JSR) in methyl ethyl ketone by solid concentration of 50% by mass, and further by adding 1% by mass of acryl based particles (Chemisnow MX series (registered trademark) produced by Soken Chemical & Engineering Co., Ltd.) having mean particle diameter of 1.5 µm based on a solid content of the above-mentioned hard court agent. On an adjacent outside of the gas barrier layer of Example 8, the above-mentioned coating liquid was coated and then dried at 80 °C, followed by cure by ultraviolet radiation of 1.0 J/cm2, and 6 µm thickness ofblemish prevention layer was prepared in the outermost layer

### [Example 10]

Example 10 was prepared in the same manner as Example 1, except for containing 0.3 g/m2 of glycol dimethyl mercapto acetate as a corrosion inhibitor in a lower adjacent layer of Example 1.

### [Comparative example 4]

As a resin base material layer, a biaxially-stretched polyester film (polyethylene terephthalate film, thickness of 100 µm) was used. On one side of the above-mentioned polyethylene terephthalate film, mixed resin of polyester resin (Polyester SP-181 produced by The Nippon Synthetic Chemical Industry Co., Ltd.), melamine resin (Super BECKAMINE J-820 produced by DIC Corp.), TDI based isocyanate (2,4-tolylene diisocyanate) and HDMI based isocyanate (1, 6-hexamethylene diisocyanate) by a solid content ratio to 20:1:1:2 and by solid concentration of 10% in toluene was coated by a gravure coating method to form an adhesive layer with 0.1 µm thickness. Further, on the adhesive layer, 80 nm thickness of a silver reflecting layer is formed by a vacuum deposition method as a silver reflecting layer. On the silver reflecting layer, mixed resin of polyethylene terephthalate with 2 and 4-tolylene diisocyanate to 10 : 2 by a resin solid content ratio was coated by a gravure coating method, and 0.1 µm thickness of a lower adjacent layer was formed. Further, on another side of the above-mentioned polyethylene terephthalate film, a liquid was coated and dried which comprised 15 parts of Diabeam UR6530 (Mitsubishi Rayon Co., Ltd.) as ultraviolet curable resin, 1 part of DAROCUR 1700(BASF Japan) as a photopolymerization initiator, 25 parts of ethyl acetate, 35 parts of butyl acetate, 10 parts of cyclohexanone and 1 part of TINUVIN 928 (BASF Japan) as a benzotriazol based ultraviolet absorber. Then, irradiated by ultraviolet radiation with a high pressure mercury vapor lamp, a surface coat layer with 5 µm thickness was formed and Comparative example 4 was prepared.

### [Example 11]

Example 11 was prepared in the same manner as Comparative example 4, except for using 1% by mass of IRGANOX 1010 (BASF Japan) as a phenol based antioxidant in the adhesive layer.

### [Example 12]

Example 12 was prepared in the same manner as Comparative example 4, except for using 1% by mass of IRGANOX 1010 (BASF Japan) as a phenol based antioxidant in the polyethylene terephtalate film base layer.

### [Example 13]

Example 13 was prepared in the same manner as Comparative example 4, except for using 1 % by mass of IRGANOX 1010 (BASF Japan) as a phenol based antioxidant in the adhesive layer and 1 % by mass of IRGANOX 1010 (BASF Japan) as a phenol based antioxidant in the polyethylene terephtalate film base layer.

### (Preparation of Sunlight collection mirror)

The above-mentioned sample was stuck on a stainless steel (SUS304) plate with a size of 0.1 mm thickness, 4 cm long and 5 cm wide, through an adhesion layer of 3 µm thickness and a sunlight collection mirror was prepared.

### [Evaluation]

About the sunlight collection mirror obtained above, normal reflectance and weather resistance, and light resistance were measured by the following method, respectively.

### <Measurement of normal reflectance>

Spectrophotometer "UV265" by Shimadzu Corp. with an integrating sphere reflective attachment was modified so that an incidence angle of an incident light was adjusted to be 5° based on a normal line of the reflective surface, and the normal reflectance of the angle of reflection 5° was measured. Evaluation was measured as average reflectance from 350 nm to 700 nm.

### <Weather resistance test of normal reflectance>

In the same manner as above mentioned measurement of normal reflectance, measured was a normal reflectance of the film mirror after exposed on a condition of temperature of 65 °C and humidity of 90% RH for 30 days. A decreasing rate of the normal reflectance before and after a weather resistance test was calculated from the ratio of the normal reflectance of the film mirror before an enforced degradation to the normal reflectance of the film mirror after an enforced degradation. The criterion for evaluation of a weather resistance test is described below.
5: Decreasing rate of normal reflectance is less than 5%.
4: Decreasing rate of normal reflectance is 5% or more and less than 10%.
3: Decreasing rate of normal reflectance is 10% or more and less than 15%.
2: Decreasing rate of normal reflectance is 15% or more and less than 20%.
1: Decreasing rate of normal reflectance is 20% or more.

### <Light resistance test of normal reflectance>

After the obtained sample was exposed by UV irradiation for 7 days under an ambience of 85 °C by using EYE SUPER UV TESTER produced by Iwasaki Electric Co., Ltd., a normal reflectance was measured by the above-mentioned method, and the decreasing rate of the normal reflectance before and after UV irradiation was calculated. The criterion for evaluation of a light resistance examination is described below.
5: Decreasing rate of normal reflectance is less than 5%.
4: Decreasing rate of normal reflectance is 5% or more and less than 10%.
3: Decreasing rate of normal reflectance is 10% or more and less than 15%.
2: Decreasing rate of normal reflectance is 15% or more and less than 20%.
1: Decreasing rate of normal reflectance is 20% or more.

### <Pencil hardness test>

Based on JIS-K5400, a pencil hardness of each sample was measured in 45° inclination and 1kg load.

The contents of sample of various film mirrors are shown in Table 1, and evaluation results are shown in Table 2.

Herein, the following abbreviations were used in Table.

### Stabilizer

IRG1010: IRGANOX 1010
IRG12 : IRGAFOS 12
IRG800 : IRGANOX PS800FL
CHIM944 : CHIMASSORB 944FDL
Ultraviolet absorber
TIN928 : TINUVIN 928
CHIM81 : CHIMASSORB 81
TIN1577 : TINUVIN 1577FF

### Corrosion inhibibor

GDMA : glycol dimercapto acetate

**Table 1**

| | Additive in Lower adjacent layer | Stabilizer in Adhesion layer | Stabilizer in Resin base Material layer | UV absorber inUV absorption layer | Gas barrier layer | Blemish prevention layer |
|---|---|---|---|---|---|---|
| Comp.1 | None | - | None | None | - | - |
| Comp.2 | None | - | None | TIN928 | - | - |
| Comp.3 | None | - | IRG1010 | None | - | - |
| Inv.1 | None | - | IRG1010 | TIN928 | - | - |
| Inv.2 | None | - | IRG1010 | CHIM81 | - | - |
| Inv.3 | None | - | IRG1010 | TIN1577 | - | - |
| Inv.4 | None | - | CHIM944 | TIN928 | - | - |
| Inv.5 | None | - | IRG1010, IRG12 | TIN928 | - | - |
| Inv.6 | None | - | IRG1010, IRG800 | TIN928 | - | - |
| Inv.7 | None | - | IRG1010, CHIM944 | TIN928 | - | - |
| Inv.8 | None | - | IRG1010 | TIN928 | Exist | - |
| Inv.9 | None | - | IRG1010 | TIN928 | Exist | Exist |
| Inv.10 | GDMA | - | IRG1010 | TIN928 | - | - |
| Inv.11 | None | IRG1010 | None | TIN928 | - | - |
| Inv.12 | None | None | IRG1010 | TIN928 | - | - |
| Inv.13 | None | IRG1010 | IRG1010 | TIN928 | - | - |
| Comp.4 | None | None | None | TIN928 | - | - |

| | | | | | | |
|---|---|---|---|---|---|---|
| Layer itself does not exist. | | | | | | |

**Table 2**

| | Weather resistance | Light resistance | Pencil hardness |
|---|---|---|---|
| Comp.1 | 2 | 1 | B |
| Comp.2 | 2 | 3 | 1H |
| Comp.3 | 2 | 2 | B |
| Inv.1 | 3 | 5 | 1H |
| Inv.2 | 3 | 4 | 1H |
| Inv.3 | 3 | 4 | 1H |
| Inv.4 | 3 | 5 | 1H |
| Inv.5 | 4 | 5 | 1H |
| Inv.6 | 4 | 5 | 1H |
| Inv.7 | 4 | 5 | 1H |
| Inv.8 | 5 | 5 | 1H |
| Inv.9 | 5 | 5 | 3H |
| Inv.10 | 5 | 5 | 1H |
| Inv.11 | 3 | 4 | 1H |
| Inv.12 | 3 | 4 | 1H |
| Inv.13 | 4 | 5 | 1H |
| Comp.4 | 2 | 3 | 1H |

As can clearly seen from the evaluation result shown in Table 2, various characteristics of Examples according to the present invention were superior to Comparative Examples. Namely, the above-mentioned means of the present invention can provide a film mirror, a method for producing the same and a reflecting device for solar thermal power generation using the same which exhibits light weight and flexible and makes it possible to make a large size mirror and to be mass-produced with a low production cost, which exhibits excellent light-resistance and weather resistance and has good normal reflectance to sunlight, as well as preventing decrease in the normal reflectance due to deterioration of silver layer in a reflecting layer.

## Claims

1. A film mirror comprising constituent layers comprising an ultraviolet absorption layer, a resin base material layer, a silver reflective layer, and a lower adjacent layer provided adjacently to each other in this order from a light incident side, or a film mirror comprising constituent layers comprising an ultraviolet absorption layer, a resin base material layers, an adhesive layer, a silver reflective layer, and a lower adjacent layer provided adjacently to each other in this order from a light incident side, wherein either the resin base material layer or the adhesive layer contains a stabilizer selected from the group consisting of a phenol based antioxidant, a phosphite based antioxidant, a thiol based antioxidant, and a hindered amine based light stabilizer.

2. The film mirror of Claim 1, wherein an ultraviolet absorber contained in the ultraviolet absorption layer is a benzotriazol based ultraviolet absorber.

3. The film mirror of Claim 1 or 2, wherein the lower adjacent layers is a resin layer containing a corrosion inhibitor.

4. The film mirror of any one of Claims 1 to 3, comprising a gas barrier layer at outside of the resin base material layer.

5. The film mirror of any one of Claims 1 to 4 comprising a blemish prevention layer as an outermost layer.

6. The film mirror of any one of Claims 1 to 5, wherein a thickness of the total layers including the resin base material layer is in the range of 75 to 250 µm.

7. A method for producing the film mirror of any one of Claims 1 to 6, comprising a step of:
forming the silver reflecting layer by a silver vacuum evaporation.

8. A reflecting device for a solar thermal power generation, comprising the film mirror of any one of Claims 1 to 6.

## Patentansprüche

1. Filmspiegel, umfassend konstituierende Schichten, die eine Ultraviolett-Absorptionsschicht, eine Harz-Basismaterialschicht, eine Silber-Reflexionsschicht und eine untere Grenzschicht umfassen, die von einer Lichteinfallsseite aus betrachtet in dieser Reihenfolge nebeneinander angeordnet sind,
oder Filmspiegel, umfassend konstituierende Schichten, die eine Ultraviolett-Absorptionsschicht, eine Harz-Basismaterialschicht, eine Klebemittelschicht, eine Silber-Reflexionsschicht und eine untere Grenzschicht umfassen, die von einer Lichteinfallsseite aus betrachtet in dieser Reihenfolge nebeneinander angeordnet sind,
wobei entweder die Harz-Basismaterialschicht oder die Klebemittelschicht einen Stabilisator ausgewählt aus der Gruppe bestehend aus einem Phenol-basierten Antioxidationsmittel, einem Phosphit-basierten Antioxidationsmittel, einem Thiol-basierten Antioxidationsmittel, und einem sterisch gehindertes Aminbasierten Lichtstabilisator enthält.

2. Filmspiegel nach Anspruch 1, wobei ein in der Ultraviolett-Absorptionsschicht enthaltener Ultraviolettabsorber ein Benzotriazol-basierter Ultraviolettabsorber ist.

3. Filmspiegel nach Anspruch 1 oder 2, wobei die untere Grenzschicht eine einen Korrosionsinhibitor enthaltende Harzschicht ist.

4. Filmspiegel nach einem der Ansprüche 1 bis 3, umfassend eine Gasbarriereschicht auf der Außenseite der Harz-Basismaterialschicht.

5. Filmspiegel nach einem der Ansprüche 1 bis 4, umfassend eine Fehlstellenverhütungsschicht als äußerste Schicht.

6. Filmspiegel nach einem der Ansprüche 1 bis 5, wobei die Dicke aller Schichten einschließlich der Harz-Basismaterialschicht im Bereich von 75 bis 250 µm liegt.

7. Verfahren zur Herstellung des Filmspiegels nach einem der Ansprüche 1-6, umfassend einen Schritt des Erzeugens der Silber-Reflexionsschicht durch Vakuumverdampfen von Silber.

8. Reflexionsvorrichtung zur Erzeugung von thermischer Solarenergie, umfassend den Filmspiegel nach einem der Ansprüche 1 bis 6.

## Revendications

1. Film miroir comprenant des couches constitutives comprenant une couche d'absorption de l'ultraviolet, une couche de matériau à base de résine, une couche réflectrice d'argent, et une couche adjacente inférieure agencées de façon adjacente les unes par rapport aux autres dans cet ordre à partir d'un côté d'incidence de lumière, ou film miroir comprenant des couches constitutives comprenant une couche d'absorption de l'ultraviolet, des couches de matériau à base de résine, une couche adhésive, une couche réflectrice d'argent et une couche adjacente inférieure agencées de façon adjacente les unes par rapport aux autres dans cet ordre à partir d'un côté d'incidence de lumière, dans lequel, soit la couche de matériau à base de résine, soit la couche adhésive, contient un stabilisant choisi dans le groupe constitué par un antioxydant à base de phénol, un antioxydant à base de phosphite, un antioxydant à base de thiol, et un photostabilisant à base d'amine encombrée.

2. Film miroir selon la revendication 1, dans lequel un absorbeur de l'ultraviolet contenu dans la couche d'absorption de l'ultraviolet est un absorbeur de l'ultraviolet à base de benzotriazole.

3. Film miroir selon la revendication 1 ou 2, dans lequel la couche adjacente inférieure est une couche de résine contenant un inhibiteur de corrosion.

4. Film miroir selon l'une quelconque des revendications 1 à 3, comprenant une couche barrière aux gaz au niveau de l'extérieur de la couche de matériau à base de résine.

5. Film miroir selon l'une quelconque des revendications 1 à 4, comprenant une couche de prévention de défaut comme couche la plus à l'extérieur.

6. Film miroir selon l'une quelconque des revendications 1 à 5, dans lequel une épaisseur de la totalité des couches incluant la couche de matériau à base de résine est dans la plage de 75 à 250 µm.

7. Procédé de production du film miroir de l'une quelconque des revendications 1 à 6, comprenant l'étape de :
formation de la couche réflectrice d'argent par évaporation sous vide d'argent.

8. Dispositif de réflexion pour génération d'énergie thermique solaire, comprenant le film miroir de l'une quelconque des revendications 1 à 6.
